# EUROPEAN PATENT SPECIFICATION

(11) **EP 4 068 882 B1**
(45) Date of publication and mention of the grant of the patent: **17.06.2026**
(21) Application number: 20891537.1
(22) Date of filing: 03.09.2020
(51) Int. Cl.: H04L 1/00, H04W 24/02, H04W 72/51, H04W 4/33, H04W 24/10, H04W 84/12

(54) **COMMUNICATION SYSTEM AND COMMUNICATION METHOD**
KOMMUNIKATIONSSYSTEM UND KOMMUNIKATIONSVERFAHREN
SYSTÈME DE COMMUNICATION ET PROCÉDÉ DE COMMUNICATION

(30) Priority: 28.11.2019 JP 2019215152
(43) Date of publication of application: 05.10.2022
(73) Proprietor: Murata Machinery, Ltd., Kyoto-shi, Kyoto 601-8326 (JP)
(72) Inventor: KITAMURA, Wataru, Inuyama-shi, Aichi 484-8502 (JP); SHIMOJI, Ryuji, Sohraku-gun, Kyoto 619-0237 (JP); YAGI, Keita, Sohraku-gun, Kyoto 619-0237 (JP)
(74) Representative: Zimmermann, Tankred Klaus
(86) International application number: PCT/JP2020/033389
(87) International publication number: WO 2021/106302

(56) References cited:
- WO-A1-2016/073988
- WO-A1-2018/142781
- JP-A- 2003 250 178
- JP-A- 2004 297 119
- JP-A- 2018 036 867
- JP-A- 2018 125 685
- JP-A- 2018 170 596
- US-A1- 2018 367 241
- US-A1- 2021 136 648

## Description

### TECHNICAL FIELD

This invention mainly relates to a wireless communication between a wireless communication device and a wireless base station. More particularly, it relates to determining a transmission rate according to a position of the wireless communication device that moves.

### BACKGROUND ART

Conventionally, there are known wireless communication devices that use trial communication to determine the transmission rate to be used in a wireless communication between devices that communicate with each other before starting a normal wireless communication. PTL 1 discloses this type of wireless communication device.

The wireless communication device in PTL 1 is configured to set a base transmission rate based on a signal quality such as received radio wave strength with the communication device to be communicated with before data transmission (a normal wireless communication), store it in the memory, and use it during data transmission.

WO 2018/142781 A1 discloses a method for controlling an unmanned traveling vehicle, wherein the unmanned travelling vehicle includes a block information acquirer that acquires position information on blocks each of which is a range of positions within which the unmanned travelling vehicle is allowed to travel. A determiner identifies a block including a current position acquired by the position acquirer and determines a wireless channel to be used for wireless communication inside the block.

US 2018/367241 A1 discloses a system for predictive adaptive coding and modulation between a transmitting terminal that is in motion and a stationary receiving terminal without a return link between the terminals where the geometry and link impairments are known in advance. Channel parameters, which may comprises at least one of a channel symbol rate, modulation type, code rate, code type or frequency, are stored in a look-up table based on predicted SNRs. The channel parameters are retrieved from the lookup table using a location of the transmitting terminal.

### PRIOR-ART DOCUMENTS

### PATENT DOCUMENTS

PTL 1: JP 2018-019307 A

### SUMMARY OF THE INVENTION

### PROBLEMS TO BE SOLVED BY THE INVENTION

However, in the configuration of PTL 1 above, when the communication device to which the wireless communication device communicates moves, the received radio wave strength changes as the communication device moves, so the base transmission rate must be reset each time the communication device moves, resulting in frequent transmission delays.

The present invention is made in view of the circumstances described above, and an object of the present invention is to provide a communication system that can quickly and appropriately indicate the transmission rate for being used in a wireless communication with a traveling cart that moves.

### MEANS FOR SOLVING THE PROBLEMS AND EFFECTS THEREOF

The problem to be solved by the present invention is as described above, and next, means for solving the problem and effects thereof will be described.

In a first aspect of the present invention, a communication system having the following configuration is provided. That is, the communication system includes a traveling cart traveling in a predetermined traveling area in a building, a wireless base station, and a controller communicating with the traveling cart via the wireless base station. The traveling cart includes a cart wireless communication unit and a cart control unit. The cart wireless communication unit performs a wireless communication with the wireless base station. The cart control unit can transmit traveling position information indicating a traveling position of the traveling cart itself in the traveling area to the wireless base station via the cart wireless communication unit. The wireless base station includes a first wireless base station communication unit and a second wireless base station communication unit. The first wireless base station communication unit performs a wireless communication with the traveling cart. The second wireless base station communication unit performs a communication with the controller. The controller includes a controller communication unit, a controller storage unit, and a controller control unit. The controller communication unit communicates with the wireless base station. The controller storage unit stores a transmission rate table designating correspondence relationships between position information indicating a plurality of positions where the traveling cart can travel in the traveling area and at least one transmission rate recommended for a wireless communication performed by the traveling cart and the wireless base station when the traveling cart is at each of the positions. The controller control unit acquires at least one transmission rate from the transmission rate table based on the position information corresponding to the traveling position information of the traveling cart received via the wireless base station, and generates transmission rate information from the transmission rate which is acquired. The controller control unit transmits the transmission rate information which is generated and the transmission information to be transmitted to the traveling cart to the wireless base station via the controller communication unit. When the wireless base station receives the transmission rate information and the transmission information by communication between the second wireless base station communication unit and the controller communication unit, the wireless base station transmits the transmission information to the traveling cart at the transmission rate acquired from the transmission rate information, via the first wireless base station communication unit.

This allows the wireless base station to determine the preferable transmission rate for wireless transmission of the transmission information to the traveling cart, according to the traveling position of the traveling cart. Therefore, retransmissions caused by wireless transmission at an inappropriate transmission rate can be suppressed.

The communication system may be configured as follows. That is, the wireless base station transmits the transmission information and the transmission rate information to the traveling cart via the first wireless base station communication unit. The cart wireless communication unit performs a wireless communication with the wireless base station at the transmission rate which is acquired from the transmission rate information received from the wireless base station.

In this case, the traveling cart can perform a wireless communication at the preferable transmission rate according to its traveling position.

The communication system may be configured as follows. That is, the cart wireless communication unit performs a wireless communication with the wireless base station at the same transmission rate as that used by the wireless base station when the wireless base station performed a communication with the cart wireless communication unit.

In this case, the traveling cart can perform a wireless communication at the preferable transmission rate according to its traveling position.

It is preferable that the communication system is configured as follows. That is, the controller control unit of the controller includes a communication quality acquisition unit and a transmission rate table updating unit. The communication quality acquisition unit acquires a communication quality when the wireless base station and the traveling cart perform a wireless communication at the transmission rate, which is recommended corresponding to the position of the traveling cart, as communication quality information. The transmission rate table updating unit updates the transmission rate table stored in the controller storage unit based on the communication quality information acquired by the communication quality acquisition unit.

This allows the recommended transmission rate to be flexibly changed in response to changes in the wireless communication environment or the like. As a result, the wireless base station can stably transmit the transmission information to the traveling cart even if the condition related to the wireless communication changes.

It is preferable that the communication system is configured as follows. That is, the wireless base station includes a wireless base station control unit that acquires the transmission rate from the transmission rate information received from the controller via the second wireless base station communication unit. When there are a plurality of transmission rates acquired from the transmission rate information by the wireless base station control unit, the first wireless base station communication unit transmits the transmission information to the traveling cart at the transmission rate selected from the plurality of transmission rates.

This allows the wireless base station to transmit the transmission information to the traveling cart while choosing depending on the case from the plurality of transmission rates that are recommended.

It is preferable that the communication system is configured as follows. That is, the controller can communicate with a plurality of the wireless base stations via the controller communication unit. When it is necessary to switch the wireless base station that is a wireless communication partner of the traveling cart due to the traveling position of the traveling cart, the controller control unit transmits the transmission rate information corresponding to the position where the traveling cart is traveling, and the transmission information to the wireless base station, which is a switching destination of the wireless communication partner of the traveling cart via the controller communication unit.

This allows, even if the wireless base station that is the wireless communication partner of the traveling cart is switched, the wireless base station which is the switching destination can start a preferable wireless communication with the traveling cart immediately by using the transmission rate recommended by the controller.

It is preferable that the communication system is configured as follows. That is, in advance, the traveling cart performs a wireless communication with the wireless base station at each of the positions and at each of a plurality of different transmission rates. The transmission rate table is created by associating at least one transmission rate used for the wireless communication that was able to communicate at a quality higher than a predetermined level and the position information for each of the positions.

This allows the recommended transmission rate to be accurately determined.

In the communication system, it is preferable that the transmission rate information and the transmission information are described in a communication frame transmitted by the controller communication unit to the wireless base station.

This allows for easy handling of information and more efficient communication by combining information indicating the two into one communication frame.

In the communication system, it is preferred that both the transmission rate information and the transmission information are described in a data body part in the communication frame.

This allows for transmission rate instruction to be given to the wireless base station without the need for a specially structured communication frame.

In a second aspect of the present invention, a following communication method is provided. That is, the communication method is used by a communication system including a traveling cart traveling in a predetermined traveling area in a building, a wireless base station, and a controller that communicates with the traveling cart via the wireless base station. The communication method includes a traveling position information notification process, a transmission rate instruction process, and a communication process. In the traveling position information notification process, the traveling cart transmits traveling position information indicating the traveling position of the traveling cart itself in the traveling area to the wireless base station. In the transmission rate instruction process, based on the traveling position information of the traveling cart received by the controller via the wireless base station, the controller transmits transmission rate information indicating at least one transmission rate recommended for a wireless communication with the wireless base station when the traveling cart is at the traveling position indicated by the traveling position information to the wireless base station. In the communication process, the wireless base station performs a wireless communication with the traveling cart at the transmission rate acquired from the transmission rate information received from the controller.

This allows the wireless base station to determine the preferable transmission rate for wireless transmission of the transmission information to the traveling cart, according to the traveling position of the traveling cart. Therefore, retransmissions caused by wireless transmission at an inappropriate transmission rate can be suppressed.

A wireless base station having the following configuration is described. That is, the wireless base station includes a first wireless base station communication unit, a second wireless base station communication unit, and a wireless base station control unit. The first wireless base station communication unit performs a wireless communication with a wireless communication device that moves. The second wireless base station communication unit performs a communication with another communication device. The wireless base station control unit analyzes a communication frame received from the other communication device via the second wireless base station communication unit and acquires a transmission rate from transmission rate information included in the communication frame. The first wireless base station communication unit performs a wireless communication with the wireless communication device at the transmission rate acquired by the wireless base station control unit from the communication frame.

This allows a wireless communication by a simple process at a preferable transmission rate with the wireless communication device that moves, without attempting communication to determine the transmission rate.

### BRIEF DESCRIPTION OF THE DRAWINGS

FIG. 1 is a schematic diagram showing a communication system for one embodiment of the present invention.
FIG. 2 is an image diagram showing a configuration of the communication system.
FIG. 3 is a diagram showing an example of a transmission rate table.
FIG. 4 is a diagram showing an example of a communication frame of management side transmission information.
FIG. 5 is a sequence diagram showing an exchange between a communication management unit, a wireless base station, and a traveling cart.

### EMBODIMENT FOR CARRYING OUT THE INVENTION

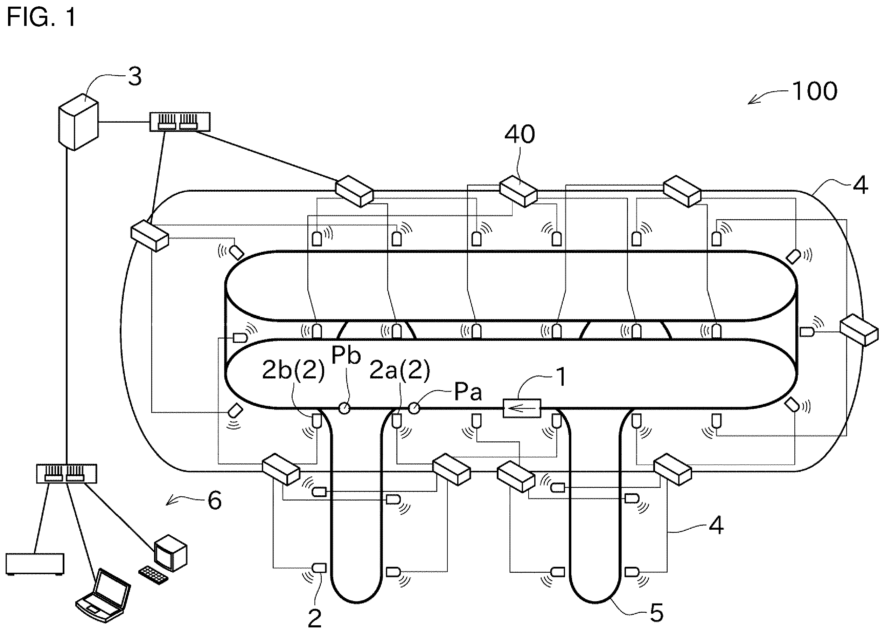

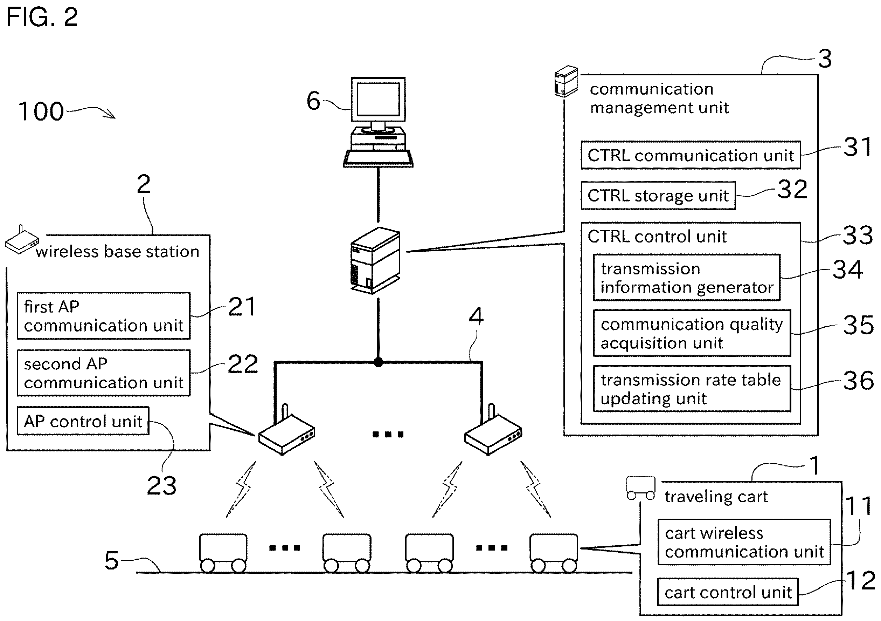

Next, one embodiment of the present invention will be described with reference to the drawings. FIG. 1 is a schematic diagram showing a communication system 100 for one embodiment of the present invention. FIG. 2 is an image diagram showing a configuration of the communication system 100.

The communication system 100 shown in FIG. 1 is used, for example, in a semiconductor manufacturing plant with a plurality of processing devices (not shown) and an automated warehouse with a plurality of stacker racks (not shown). As shown in FIG. 1, the communication system 100 mainly includes a plurality of traveling carts 1 (shown only one in FIG. 1), a plurality of wireless base stations 2, a communication management unit (controller) 3, and a wired LAN 4.

The traveling cart 1 is a transport device that travels over a traveling area consisting of a track 5. The track 5 is laid in a semiconductor manufacturing plant, an automated warehouse, or other buildings. The traveling cart 1 can be used, for example, to transport a FOUP (Front Opening Unify Pod) and other objects to be transported between processing devices, stacker racks, and the like.

The traveling cart 1 may be, for example, an OHT (Overhead Hoist Transfer), and an OHS (Over Head Shuttle), which are overhead traveling vehicles, and RGV (Rail Guided Vehicles), etc., which are tracked unmanned transport vehicles, and etc., but not limited to.

The track 5 is provided, for example, suspended from the ceiling. However, it is not limited to this, and the communication system 100 of this embodiment can be used for trackless traveling vehicles, for example, with AGVs (Automated Guided Vehicles) which are unmanned transport vehicles. In this case, travel routes and a traveling area of the traveling cart are substantially defined by guiding tapes such as magnetic tapes attached to the floor surface or guide sections including barcodes or the like.

The traveling cart 1, as shown in FIG. 2, has a cart wireless communication unit 11 and a cart control unit 12. The traveling cart 1 has a known computer built in. This computer is provided with a CPU, an HDD. a ROM, and a RAM, etc. The HDD, the ROM and the RAM constitute a cart storage unit that stores various types of information related to a wireless communication. The nonvolatile memory of the cart storage unit, including the HDD and the ROM, stores programs and the like to realize a wireless communication. By the cooperation of the above hardware and software, the computer can be operated as the cart wireless communication unit 11 and the cart control unit 12.

The cart wireless communication unit 11 performs a wireless communication with the wireless base station 2 in accordance with the prescribed wireless communication standards. The wireless communication standards, for example, IEEE 802.11, IEEE802.15, and ARIB STD-108, etc. can be used, but are not limited to these. The wireless communication can be realized by a wireless LAN that conforms to the wireless communication standards, etc., exemplified above.

The cart wireless communication unit 11 performs a wireless communication with one wireless base station 2, out of the plurality of the wireless base stations 2, corresponding to a traveling position of the traveling cart 1. The wireless communication coverage areas of the plurality of the wireless base stations 2 are different from each other. Therefore, the wireless base station 2 with which the cart wireless communication unit 11 performs a wireless communication varies according to the traveling position of the traveling cart 1.

The cart control unit 12 generates cart side transmission information and controls a wireless communication performed by the cart wireless communication unit 11. The cart side transmission information is information to be transmitted to the communication management unit 3. The cart side transmission information includes traveling position information etc. The traveling position information indicates the traveling position of the traveling cart 1. The traveling position information may include a cart status of the traveling cart 1. The cart status may be a target position, speed, acceleration/deceleration, operating status, or the like. The cart position information may include environmental information in the vicinity of the traveling cart 1. The cart control unit 12 instructs the cart wireless communication unit 11 on the transmission rate for being used in a wireless communication. This instruction of the transmission rate will be described later in detail.

The cart control unit 12 acquires traveling position information indicating the traveling position of the vehicle itself in the traveling area by a position sensor or the like (not shown) attached to the traveling cart 1. This acquisition of traveling position information is performed, for example, as follows.

That is, the position sensor attached to the traveling cart 1 includes an optical receiver, for example. A plurality of optical transmitters are provided along the track 5 which the traveling cart 1 travels along. In advance, the coordinates of each optical transmitter in the traveling area, in correspondence with the identification information of each optical transmitter, are stored in the cart storage unit. Each optical transmitter transmits an optical signal including the identification information to identify the optical transmitter itself. When the traveling cart 1 passes a predetermined position on the track 5, the position sensor (optical receiver) receives the optical signal transmitted from the optical transmitter. The cart control unit 12 of the traveling cart 1 acquires the traveling position information of the traveling cart itself by identifying the optical transmitter based on the received optical signal. Alternatively, a plurality of indicators (for example, barcodes, etc.) are provided along with the track 5 which the traveling cart 1 travels along, and the cart control unit 12 of the traveling cart 1 may acquire the traveling position information of the traveling cart itself by identifying the indicator based on the information read by an indicator reader (not shown). Alternatively, reference marks (ID tags) are provided at predetermined intervals along the track 5 which the traveling cart 1 travels along, and the cart control unit 12 of the traveling cart 1 may acquire the traveling position information of the traveling cart 1 itself by computing the distance from the reference mark by counting wheel encoder outputs.

The cart control unit 12 describes the traveling position information of the traveling cart 1 itself acquired as described above in the cart side transmission information, and transmits it to the wireless base station 2 via the cart wireless communication unit 11. This allows the position of the traveling cart 1 to be notified to the communication management unit 3, which will be described below.

The correspondence relationship between the identification information of the optical transmitter and the coordinates of the optical transmitter may be stored on the communication management unit 3 side instead of being stored in the traveling cart 1. In this case, the cart control unit 12 transmits the received identification information of the optical transmitter to the communication management unit 3 via the wireless base station 2 as traveling position information.

The wireless base station 2 is a so-called access point that is connected to the communication management unit 3 via the wired LAN 4 using LAN cables. The wireless base station 2 performs wired communication with the communication management unit 3. As shown in FIG. 1, the wired LAN 4 has an appropriate number of switching hubs 40.

The wireless base station 2 performs wired communication with the communication management unit 3, and forms a wireless network around itself. The wireless base station 2 can perform a wireless communication with the traveling cart 1 that exists in the wireless communication coverage area around the wireless base station 2 itself.

In the communication system 100 of this embodiment, a plurality of the wireless base stations 2 are provided along the track 5 so that the entire traveling area in which the traveling cart 1 travels is covered by the wireless communication coverage area of those wireless base stations 2.

In this embodiment, each of the wireless base stations 2 has preset information on which position the traveling cart 1 is the target of a wireless communication by the wireless base station 2, in the traveling area of the traveling cart 1 included in the wireless communication coverage area. In particular, in a part where the wireless communication coverage area of two wireless base stations 2 overlaps, the wireless base station 2 that has jurisdiction for each position in the traveling area included in the overlapped part is preset.

In this embodiment, the correspondence relationship between each position of the traveling cart 1 and the wireless base station 2 that performs a wireless communication with that traveling cart 1 is predetermined. Therefore, at each position, the traveling cart 1 can somehow acquire in advance which transmission rate is preferred for a wireless communication with the wireless base station 2, and can perform a wireless communication according to the results acquired.

As shown in FIG. 2, the wireless base station 2 has a first AP communication unit 21, a second AP communication unit 22, and an AP control unit 23. Here, AP is an abbreviation for wireless base station.

Like the traveling cart 1, the wireless base station 2 has a known computer built in. This computer has a CPU, an HDD, a ROM, and a RAM, etc. The HDD, the ROM, and the RAM constitute an AP storage unit (not shown) that stores various types of information related to a wireless communication. The nonvolatile memory of the AP storage unit, including the HDD and the ROM, stores programs and the like to realize a wireless communication. By the cooperation of the above hardware and software, the computer can be operated as the first AP communication unit 21, the second AP communication unit 22, and the AP control unit 23.

The first AP communication unit 21 complies with the above-mentioned wireless communication standard, and performs a wireless communication with the cart wireless communication unit 11 of the traveling cart 1. Therefore, the traveling cart 1 corresponds to a wireless communication device. The first AP communication unit 21 transmits management side transmission information (transmission information) described below to the traveling cart 1 with an appropriate transmission rate. The management side transmission information is information received from the communication management unit 3 by the second AP communication unit 22.

The second AP communication unit 22 performs wired communication with the communication management unit 3 via the wired LAN 4. Here, in relation to the wireless base station 2, the communication management unit 3 corresponds to a different communication device than the traveling cart 1 (that is, another communication device). The second AP communication unit 22 transmits cart side transmission information to the communication management unit 3. The cart side transmission information is information received from the traveling cart 1 by the first AP communication unit 21.

The AP control unit 23 controls communications performed by the first AP communication unit 21 and the second AP communication unit 22. The AP control unit 23 instructs the transmission rate for being used in a wireless communication to the first AP communication unit 21. This instruction of the transmission rate will be described later in detail.

The communication management unit 3 is a computer used to manage each of the plurality of traveling carts 1. The communication management unit 3 assigns each of a plurality of transport tasks to any of the plurality of traveling carts 1 that are managed, so as to determine the travel route and the like for each of the traveling carts 1. The transport tasks are given by a transport management unit 6, etc. in upper layer shown in FIG. 1 or FIG. 2.

In FIG. 2, the transport management unit 6 comprehensively controls the transport system to which the communication system 100 is applied. The transport management unit 6 includes one or more computers and performs various controls associated with transport management.

As shown in FIG. 2, the communication management unit 3 includes a CTRL communication unit 31, a CTRL storage unit 32, and a CTRL control unit 33. Here, CTRL is an abbreviation for controller.

The communication management unit 3 is, for example, configured as a known computer having a CPU, a ROM, a RAM, an HDD, and the like, which are not shown. The ROM, the RAM, and the HDD store various programs and data related to management. By the cooperation of the above hardware and software, the computer can be operated as the CTRL communication unit 31, the CTRL storage unit 32, and the CTRL control unit 33.

The CTRL communication unit 31 is connected to the second AP communication unit 22 of the wireless base station 2 via the wired LAN. The CTRL communication unit 31 performs wired communication with the second AP communication unit 22. In the communication management unit 3, the CTRL communication unit 31 transmits management side transmission information by performing wired communication with the second AP communication unit 22 included in the wireless base station 2. In the wireless base station 2, when the second AP communication unit 22 receives the management side transmission information, the first AP communication unit 21 forwards the management side transmission information to the target traveling cart 1 via a wireless communication. That is, the communication management unit 3 communicates with the traveling cart 1 via the wireless base station 2.

The CTRL storage unit 32 includes the HDD, the ROM, and the like. The CTRL storage unit 32 stores programs to realize a wireless communication, a transmission rate table, and the like. The transmission rate table is used to instruct the transmission rate for being used in a wireless communication between the traveling cart 1 and the wireless base station 2.

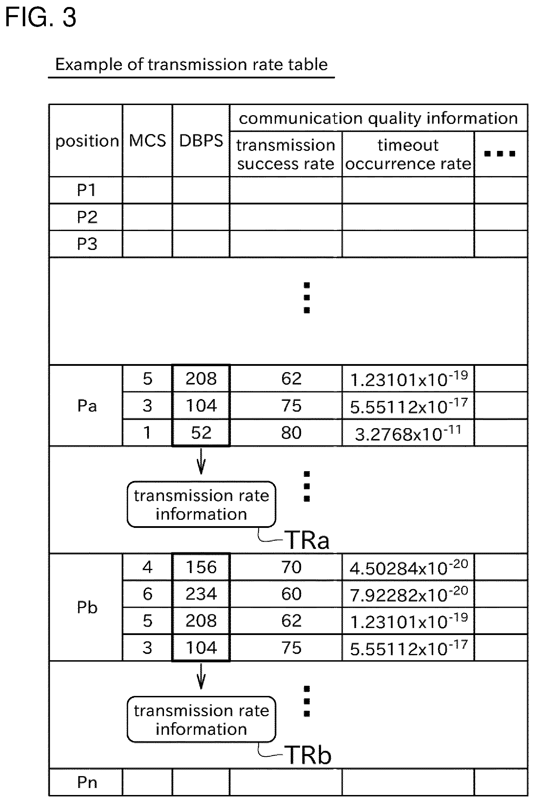

The transmission rate table designates, as shown in FIG. 3 for example, correspondence relationships between a number of positions (P1, P2, ..., Pn) belonging to the traveling area in which the traveling cart 1 is traveling, a plurality of recommended transmission rates when the traveling cart 1 is at each position (P1, P2, ..., Pn), and communication quality information at each transmission rate. FIG. 1 shows only two positions Pa, Pb as representatives, among the many positions P1, P2, ..., Pn that cover the entire traveling area. The transmission rates included in the transmission rate table are all recommended from the aspect of a high-quality wireless communication.

Not limited to the above, the transmission rate table may, for example, only designate correspondence relationships between positions and transmission rates. In this case, a separate table designating the correspondence relationships between each transmission rate and communication quality information may be stored.

The transmission rate table does not have to designate the correspondence relationships between each position included in the traveling area in which the traveling cart 1 travels and the transmission rate. For example, it may indicate correspondence relationships between each route range (equivalent to a line segment of a predetermined length) included in the traveling area and the transmission rate. Alternately, it may indicate the correspondence relationships between each area of a predetermined length (equivalent to a surface of a predetermined area) included in the traveling area and the transmission rate.

The transmission rate table is prepared in advance based on previously acquired data. Specifically, when commissioning the communication system 100 for example, at each position of the traveling cart 1, a survey (survey work) is conducted on the transmission rate that enables a high-quality wireless communication with the wireless base station 2 that has jurisdiction over that position.

In this survey work, the traveling cart 1 moves to a number of positions P1, P2, ..., Pn in the traveling area in order. At each position, the traveling cart 1 stops and performs a test wireless communication with the wireless base station 2 that has jurisdiction over that position using a number of different transmission rates. If the wireless base station 2 successfully receives data from the traveling cart 1, the wireless base station 2 transmits response data to the traveling cart 1 at the same transmission rate as that used by the traveling cart 1 for transmission.

The traveling cart 1 and/or the wireless base station 2 aggregates the number of transmissions, the number of times they were able to receive within a predetermined time period after transmission, etc., with respect to the current position of the traveling cart 1. This makes it possible to acquire communication quality information for each of the different transmission rates.

Other examples of communication quality information may include the well-known packet error rate, timeout occurrence rate, transmission success rate, number of retransmissions, or the like. As long as it is possible to determine whether the wireless communication is good or bad for each of the transmission rates, there is no limitation on the format of the communication quality information and its computation (acquisition) method.

The communication management unit 3 performs wired communication with the wireless base station 2 to acquire, for one position, communication quality information corresponding to each of the plurality of transmission rates used in the wireless communication which was performed by the traveling cart 1 and/or the wireless base station 2. The communication management unit 3 acquires this communication quality information for each of a number of positions P1, P2, ..., Pn.

The communication management unit 3 can acquire the position information of the traveling cart 1 from the cart side transmission information received from the traveling cart 1 via the wireless base station 2. The communication management unit 3 can directly acquire communication quality information aggregated on the sides of the traveling cart 1 and/or wireless base station 2. Alternately, the communication management unit 3 itself may acquire communication quality information by aggregating the success or failure of a wireless communication via the wireless base station 2.

Then, the communication management unit 3 extracts, per one position at which the traveling cart travels, one or more transmission rates that achieved a communication quality that is equal to or higher than the preset communication quality threshold among the plurality of transmission rates which were used for a wireless communication performed at this position, and arrange them in order of best communication quality. If there is only one transmission rate that met the above condition, only one transmission rate is described in the table with respect to the position of the traveling cart 1.

The communication management unit 3 generates a transmission rate table by associating at least one transmission rate created as described above to the position information of the traveling cart 1.

However, the transmission rate table is not limited to being generated as described above. The transmission rate table may be generated, without being based on a survey using actual equipment, but for example based on the operating history data of other semiconductor manufacturing plants or automatic warehouses, where the positions at which the traveling cart 1 travels and the wireless base stations 2 are located in the same relationship. The transmission rate table may be generated by a machine-learned model trained by the positional relationship between each position of the traveling cart 1 and the wireless base station, the existence and types of obstacles between them, etc., and the corresponding transmission rate of communication. The transmission rate table may be generated by a management device provided separately from the communication management unit 3.

The transmission rate table is stored in a memory in the CTRL storage unit 32 whose contents can be rewritten. Therefore, the contents of the transmission rate table can be updated as appropriate.

As shown in FIG. 2, the CTRL control unit 33 includes the transmission information generator 34, a communication quality acquisition unit 35, and a transmission rate table updating unit 36.

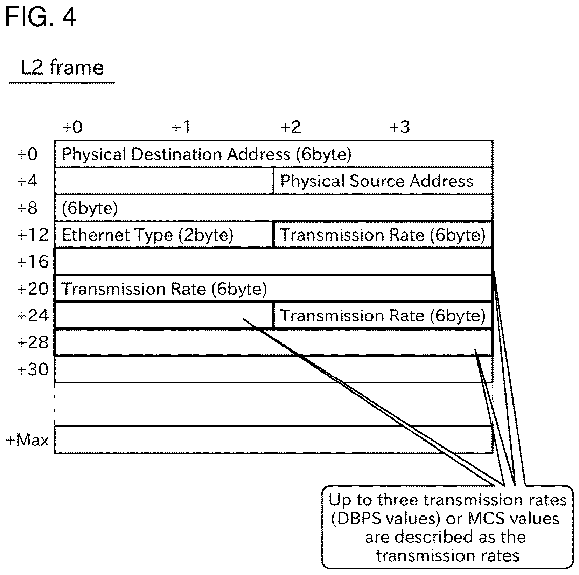

The transmission information generator 34 generates management side transmission information. The management side transmission information is information transmitted from the communication management unit 3 to the traveling cart 1 via the wireless base station 2. This management side transmission information includes query information to inquire about the status of the traveling cart 1, or transport task information to instruct the above-mentioned transport task to the traveling cart 1. The management side transmission information is described in the communication frame transmitted from the communication management unit 3 to the wireless base station 2. Hereafter, the communication frame in which the management side transmission information is described may be referred to as management side transmission frame. In addition to the management side transmission information, the transmission rate information for a wireless communication between the wireless base station 2 and the traveling cart 1 is described in this management side transmission frame. The transmission rate information includes one or more recommended transmission rates corresponding to the position of the traveling cart 1, acquired by referring to a transmission rate table. The description of the transmission rate information is performed by the transmission information generator 34. An example of the management side transmission frame is shown in FIG. 4.

The communication quality acquisition unit 35 acquires communication quality information for each transmission rate used in a wireless communication performed between the traveling cart 1 and the wireless base station 2. This communication quality information includes, for example, at least some of the above-mentioned number of transmissions, number of times received within a predetermined time period after transmission, timeout occurrence rate, packet error rate, transmission success rate, and number of retransmissions. The communication quality information can be acquired through wired communication between the CTRL communication unit 31 and the wireless base station 2.

Acquisition of the communication quality information can be realized, for example, by the communication quality acquisition unit 35 acquiring the communication quality information as it is, which is aggregated and acquired by the traveling cart 1 and/or the wireless base station 2. The communication quality information is acquired via wired communication between the traveling cart 1 and the wireless base station 2. The communication quality information can also be acquired on the communication quality acquisition unit 35 side by aggregating relevant data. The relevant data is the number of times that the cart side transmission information, which is the response information to the management side transmission information, was able to be received within a predetermined time after the management side transmission information was transmitted via the CTRL communication unit 31, or the like. It is preferable to acquire this communication quality information together with the corresponding transmission rate, position information of the position of the traveling cart 1 where the wireless communication using the transmission rate was performed, or the like.

The CTRL control unit 33 makes the CTRL storage unit 32 store the communication quality information acquired by the communication quality acquisition unit 35. The communication quality information is stored in the CTRL storage unit 32 while being associated with the transmission rate used in acquiring the communication quality information, the position information indicating the position where the wireless communication using this transmission rate is performed (i.e., the traveling position information of the traveling cart 1 where the wireless communication took place), and the information (e.g., wireless base station number, MAC address, etc.) identifying the traveling base station 2 which is the wireless communication partner of the traveling cart 1.

The transmission rate table updating unit 36 can update the contents of the transmission rate table stored in the CTRL storage unit 32. For example, when a plurality of transmission rates are described in the transmission rate table corresponding to the position information, the order in which transmission rates are recommended may change as a result of newly acquired communication quality information by the communication quality acquisition unit 35. In this case, the transmission rate table updating unit 36 updates the transmission rate table to reflect the new communication quality information.

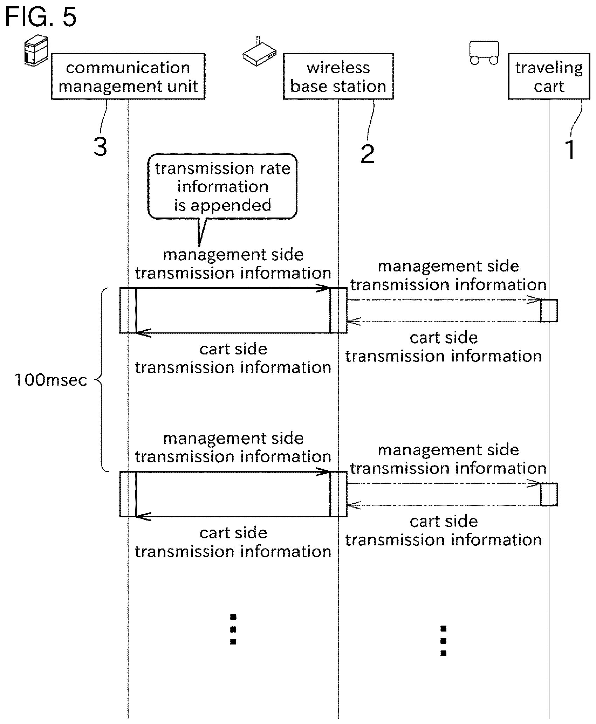

Next, the information exchange between the communication management unit 3, the wireless base station 2, and the traveling cart 1 described above will be explained in detail with reference to FIG. 5.

As shown in FIG. 5, the communication management unit 3 transmits the management side transmission information generated by the transmission information generator 34 via the CTRL communication unit 31, every 100 milliseconds for example. At this time, the communication management unit 3 transmits not only the management side transmission information, but the transmission rate information indicating at which transmission rate the wireless base station 2 should communicate with the traveling cart 1 to the wireless base station 2. This transmission rate information is generated by the communication management unit 3 using the transmission rate table.

Based on the received transmission rate information, the wireless base station 2 determines the transmission rate for a wireless communication with the traveling cart 1. The wireless base station 2 performs a wireless communication with the traveling cart 1 using this transmission rate, and transmits the management side transmission information and transmission rate information to the traveling cart 1.

After receiving the management side transmission information from the wireless base station 2, the traveling cart 1 generates the cart side transmission information as a response to the management side transmission information. This cart side transmission information includes the traveling position information of the traveling cart 1 itself acquired by the position sensor. Based on the received transmission rate information, the traveling cart 1 determines the transmission rate for communicating with the wireless base station 2. The traveling cart 1 performs a wireless communication with the wireless base station 2 using this transmission rate and transmits the cart side transmission information to the wireless base station 2. The wireless base station 2 transmits the cart side transmission information received from the traveling cart 1 to the communication management unit 3 by wired communication.

Next, the communication method used for instructing the transmission rate for being used by the traveling cart 1 and the wireless base station 2 that perform a wireless communication in the communication system 100 of this embodiment will be described in detail with reference to FIGS. 1 through 5.

In the communication system 100 of this embodiment, the communication management unit 3 determines at least one transmission rate for being used by the traveling cart 1 and the wireless base station 2 depending on the traveling position of the traveling cart 1. The communication management unit 3 instructs at least one transmission rate to the traveling cart 1 and the wireless base station 2 in the form of a description in the management side transmission frame. In the following, in the example where the traveling cart 1 travels from the position Pa to the position Pb shown in FIG. 1, the case in which the communication management unit 3 instructs the wireless base station 2 and the traveling cart 1 to use a transmission rate determined according to the traveling position of the traveling cart 1 will be described.

The communication management unit 3 repeatedly transmits the management side transmission information to the traveling cart 1 at predetermined time intervals. The traveling cart 1 transmits the cart side transmission information to the communication management unit 3. Since the cart side transmission information is transmitted by the traveling cart 1 in the form of a response to the management side transmission information, the cart side transmission information may be referred to as response information in the following. Mutual communication is performed via the wireless base station 2.

When the traveling cart 1 receives the management side transmission information while traveling at the position Pa shown in FIG. 1, it generates the cart side transmission information, which is a response to the management side transmission information. In this cart side transmission information, the position information of the position Pa is included as the traveling position information of the traveling cart 1 itself. The position information can be, for example, the identification information of the optical transmitter provided at the position Pa, or coordinate information based on the identification information.

The traveling cart 1 wirelessly transmits the cart side transmission information to the wireless base station 2 (traveling position information notification process). As described above, the cart side transmission information is transmitted as a response to the management side transmission information. The transmission of the cart side transmission information by a wireless communication is performed at the transmission rate acquired based on the transmission rate information received by the traveling cart 1, together with the management side transmission information.

After the communication management unit 3 transmits the management side transmission information, the CTRL control unit 33 waits to receive the cart side transmission information, which is the response to the management side transmission information, from the traveling cart 1 via the wireless base station 2. The cart side transmission information is transmitted from the traveling cart 1 to the first AP communication unit 21 of the wireless base station 2. The cart side transmission information received by the wireless base station 2 is transmitted to communication management unit 3 by wired communication between the second AP communication unit 22 and the CTRL communication unit 31.

When the CTRL communication unit 31 receives the cart side transmission information, the CTRL control unit 33 reads the traveling position information of the traveling cart 1 from the cart side transmission information. The CTRL control unit 33 acquires the transmission rate corresponding to the position Pa (for example, the portion enclosed by thick lines in FIG. 3) from the transmission rate table stored in the CTRL storage unit 32. The position Pa is a position indicated in the traveling position information. In the example shown in FIG. 3, corresponding to the position Pa, three transmission rates (DBPS values) are described in the transmission rate table. The DBPS value is the number of bits per symbol, and DBPS is an abbreviation for Data Bit Per Symbol.

In the coding and modulation scheme (MCS: Modulation Coding Scheme) defined in each communication standard, a transmission rate corresponding to each MCS value (MCS Index value) is defined. Therefore, the transmission rate can be expressed in the form of MCS value instead of DBPS value. The transmission rate can also be expressed in other known formats.

The transmission information generator 34 creates management side transmission information and describes the management side transmission information in a single communication frame. The transmission information generator 34 also generates transmission rate information TRa including three transmission rates acquired as described above from the transmission rate table and describes this transmission rate information TRa in the communication frame in which the management side transmission information is described. As a result of this, the management side transmission frame is generated. As shown in FIG. 4, the management side transmission frame follows the known L2 frame. As shown by a portion enclosed by thick lines in FIG. 4, in the management side transmission frame, the transmission rate information TRa is described at the beginning of the data body (payload) of the L2 frame. The transmission rate information TRa is represented by the DBPS value corresponding to each transmission rate (or the MCS value). In the example in FIG. 3, the transmission rate information TRa corresponding to the position Pa is represented by three transmission rates, which are DBPS values (208, 104, 52). Correspondingly, the three DBPS values are described at the beginning of the data body of the L2 frame in order of best communication quality. In other words, in order of most recommended. In this embodiment, six bytes are used to describe one DBPS value. Therefore, in the example in FIG. 4, eighteen bytes, three times six bytes, are allocated at the beginning of the payload of the L2 frame. The management side transmission information (for example, the query information described above) is described in the 19th and succeeding bytes of the payload. Thus, in this embodiment, the management side transmission information and the transmission rate to be instructed to the wireless base station 2 are described in the data body of the same L2 frame.

The CTRL control unit 33 transmits the transmission rate information and management side transmission information to the second AP communication unit 22 of the wireless base station 2a by the transmission information generator 34 (transmission rate indication process). This transmission is performed via the CTRL communication unit 31.

The AP control unit 23 of the wireless base station 2a retrieves the transmission rate described first from the beginning in the transmission rate information (for example, a plurality of DBPS values). The transmission rate information is described in the communication frame received from the communication management unit 3 via the AP communication unit 22. The AP control unit 23 of wireless base station 2a instructs this transmission rate to the first AP communication unit 21.

The first AP communication unit 21 wirelessly transmits the management side transmission information received via the second AP communication unit 22 to the corresponding traveling cart 1 (communication process). In this embodiment, this communication process is realized by transmitting the management side transmission frame (including transmission rate information in addition to management side information) to the traveling cart 1 as it is. The transmission rate at this time is determined according to the transmission rate indicated by the AP control unit 23 (DBPS value: 208).

While a wireless communication is performed by the first AP communication unit 21, the AP control unit 23 acquires the communication quality of the wireless communication, which uses the instructed transmission rate (DBPS value: 208). As described above, this communication quality information can be acquired by determining whether or not response information (cart side transmission information) to the management side transmission information was received within a predetermined time period after the management side transmission information was wirelessly transmitted to the traveling cart 1, or the like. The AP control unit 23 monitors the communication quality based on this aggregate result.

The communication quality information may include, for example, the result of how many retransmissions were made out of the predetermined number of performing times (e.g., five times) in the wireless communication between the wireless base station 2a and the traveling cart 1 at a specific transmission rate. More specifically, for example, a wireless communication was performed between the wireless base station 2a and the traveling cart 1 using each of three DBPS values (208, 104, 52) as the transmission rates. Out of five performing times, retransmission occurred three times when the DBPS value was 208, retransmission occurred two times when the DBPS value was 104, retransmission occurred one time when the DBPS value was 52. The communication quality information includes the result above. The communication quality information is notified to the communication management unit 3 (communication quality acquisition unit 35) via the wireless base station 2a.

For example, during a wireless communication, there is a possibility that the communication quality may become lower than the predetermined threshold for some reason. The degradation of communication quality can be judged, for example, by whether or not the number of retransmissions falls within the specified number of times, but is not limited to this. When a decrease in communication quality is detected, the AP control unit 23 instructs the DBPS value (104) described second from the beginning in the transmission rate information received most recently to the first AP communication unit 21. The first AP communication unit 21 performs a wireless communication at the transmission rate (DBPS value: 104) according to the instruction from the AP control unit 23.

The AP control unit 23 outputs the above instructions for changing the transmission rate to the first AP communication unit 21, and notifies the communication quality information corresponding to the transmission rate (DBPS value: 208) to the communication management unit 3 at the appropriate timing. The communication quality information for each of the transmission rates at which a wireless communication was performed may be notified to the communication management unit 3 at the appropriate timing.

The traveling cart 1 receives the management side transmission information transmitted from the wireless base station 2a via the cart wireless communication unit 11. The traveling cart 1 is traveling from the position Pa to the position Pb, but at the time of reception of the management side transmission information, it has not yet been reached to the position Pb.

When the cart control unit 12 of the traveling cart 1 receives the management side transmission information via the cart wireless communication unit 11, it generates the cart side transmission information. This cart side transmission information includes current traveling position information (position Pa) of the traveling cart 1 itself, etc. Furthermore, the cart control unit 12 instructs the transmission rate to the cart wireless communication unit 11. The transmission rate is used when the cart wireless communication unit 11 transmits the cart side transmission information to the wireless base station 2a. Here, an example in which the wireless base station 2a transmitted the management side transmission information at the transmission rate (DBPS value: 208), which is firstly listed, will be described. The cart control unit 12 retrieves the firstly-listed DBPS value (208) in the transmission rate information (for example, a plurality of DBPS values) that is received. The cart control unit 12 instructs this DBPS value as the transmission rate to the cart wireless communication unit 11.

The cart wireless communication unit 11 transmits the cart side transmission information to the first AP communication unit 21 of the wireless base station 2a, using the transmission rate instructed by the cart control unit 12 (DBPS value: 208).

While a wireless communication is performed by the cart wireless communication unit 11, the cart control unit 12 acquires the communication quality information of the wireless communication at the transmission rate (DBPS value: 208) as described above, and monitors the communication quality.

As described above, there is a possibility that the communication quality may become lower than the predetermined threshold for some reason during a wireless communication. When a decrease in communication quality is detected, the cart control unit 12 instructs the secondly-listed DBPS value (104) in the transmission rate information received most recently to the cart wireless communication unit 11. The cart wireless communication unit 11 performs a wireless communication at the transmission rate (DBPS value: 104) according to the instruction from the cart control unit 12.

Thus, in this embodiment, the transmission rate information described in the management side transmission frame is used, practically speaking, to instruct the transmission rate not only to the wireless base station 2a, but also to the traveling cart 1.

The cart control unit 12 outputs the above instructions for changing the transmission rate to the cart wireless communication unit 11, and notifies the communication quality information corresponding to the transmission rate (DBPS value: 208) to the communication management unit 3 at the appropriate timing.

The wireless base station 2a transmits the cart side transmission information received via the first AP communication unit 21 to the CTRL communication unit 31 of the communication management unit 3. This transmission is performed via the second AP communication unit 22.

Next, consider the case where the traveling cart 1 has reached the position Pb at the time it receives the management side transmission information from the wireless base station 2a. In this case, the position Pb, which is current traveling position information of the traveling cart 1 itself, is described in the cart side transmission information generated by the cart control unit 12. This cart side transmission information is transmitted via the wireless base station 2a to the CTRL control unit 33 of the communication management unit 3.

When the CTRL control unit 33 of the communication management unit 3 receives the cart side transmission information, the CTRL control unit 33 acquires the wireless base station 2 that has jurisdiction over the position Pb. This acquisition is based on the position Pb which is the new traveling position information of the traveling cart 1. In this embodiment, it is the wireless base station 2b shown in FIG. 1 that has jurisdiction over the position Pb. Therefore, the wireless base station 2b is the switching destination, where the traveling cart 1 switches the wireless communication partner from the wireless base station 2a. The CTRL control unit 33 acquires one or more transmission rates corresponding to the position Pb based on the transmission rate table stored in the CTRL storage unit 32. The CTRL control unit 33 generates transmission rate information TRb.

The transmission information generator 34 generates new management side transmission information. In addition to the management side transmission information, the transmission rate information TRb acquired as described above is described in the management side transmission frame transmitted from the communication management unit 3 to the wireless base station 2b.

The CTRL control unit 33 transmits the new management side transmission information generated by the transmission information generator 34 to the wireless base station 2b via the CTRL communication unit 31.

As a result, even if the wireless base station 2b has not been in a wireless communication with the traveling cart 1 so far, the wireless base station 2b can perform a wireless communication with the traveling cart 1 smoothly by referring to the transmission rate information received from the communication management unit 3. In other words, the transmission rate can be suitably determined even at the initial stage of a wireless communication. Thus, there is no need to attempt communication at various transmission rates, and communication delays can be avoided.

As described above, the communication system 100 in this embodiment includes the traveling cart 1, the wireless base station 2, and the communication management unit 3. The traveling cart 1 travels in the predetermined traveling area in the building. The communication management unit 3 communicates with the traveling cart 1 via the wireless base station 2. The traveling cart 1 includes the cart wireless communication unit 11 and the cart control unit 12. The cart wireless communication unit 11 performs a wireless communication with the wireless base station 2. The cart control unit 12 can transmit traveling position information indicating the traveling position of the traveling cart 1 itself in the traveling area to the wireless base station 2 via the cart wireless communication unit 11. The wireless base station 2 includes the first AP communication unit 21 and the second AP communication unit 22. The first AP communication unit 21 performs a wireless communication with the traveling cart 1. The second AP communication unit 22 performs a communication with the communication management unit 3. The communication management unit 3 includes the CTRL communication unit 31, the CTRL storage unit 32, and the CTRL control unit 33. The CTRL communication unit 31 communicates with the wireless base station 2. The CTRL storage unit 32 stores the transmission rate table designating the correspondence relationships between position information, which indicates a plurality of the positions where the traveling cart 1 can travel in the traveling area, and at least one transmission rate recommended for a wireless communication performed by the traveling cart 1 and the wireless base station 2 when the traveling cart 1 is at each of the positions. The CTRL control unit 33 acquires at least one transmission rate information from the transmission rate table based on the position information corresponding to the traveling position information of the traveling cart 1. The traveling position information of the traveling cart 1 is received via the wireless base station 2. The CTRL control unit 33 generates the transmission rate information from the acquired transmission rate which is acquired. The CTRL control unit 33 transmits the transmission rate information, which is generated, and the management side transmission information to be transmitted to the traveling cart 1 to the wireless base station 2 via the CTRL communication unit 31. When the wireless base station 2 receives the transmission rate information and the management side transmission information by communication with the second AP communication unit 22 and the CTRL communication unit 31, the wireless base station 2 transmits the management side transmission information to the traveling cart 1 at the transmission rate acquired from the transmission rate information, via the first AP communication unit 21.

This allows the wireless base station 2 to determine the preferable transmission rate for wireless transmission of the management side transmission information to the traveling cart 1, according to the traveling position of the traveling cart 1. Therefore, retransmissions caused by wireless transmission at an inappropriate transmission rate can be suppressed.

In the communication system 100 of this embodiment, the wireless base station 2 transmits the management side transmission information and the transmission rate information to the traveling cart 1 via the first AP communication unit 21. The cart wireless communication unit 11 performs a wireless communication with the wireless base station 2 at the transmission rate, which is acquired from the transmission rate information received from the wireless base station 2.

This allows the traveling cart 1 to perform a wireless communication at the preferable transmission rate according to its traveling position.

In the communication system 100 of this embodiment, the CTRL control unit 33 of the communication management unit 3 includes the communication quality acquisition unit 35 and the transmission rate table updating unit 36. The communication quality acquisition unit 35 acquires the communication quality when the wireless base station 2 and the traveling cart 1 perform a wireless communication at the transmission rate, which is recommended corresponding to the position of the traveling cart 1, as the communication quality information. The transmission rate table updating unit 36 updates the transmission rate table stored in the CTRL storage unit 32 based on the communication quality information acquired by the communication quality acquisition unit 35.

This allows the transmission rate recommended by the communication management unit 3 to the wireless base station 2 to be flexibly changed in response to changes in the wireless communication environment or the like. As a result, the wireless base station 2 can stably transmit the management side transmission information to the traveling cart 1 even if the condition related to wireless communication changes.

In the communication system 100 of this embodiment, the wireless base station 2 includes an AP control unit 23. The AP control unit 23 acquires the transmission rate from the transmission rate information received from the communication management unit 3 via the second AP communication unit 22. When there are a plurality of transmission rates acquired from the transmission rate information by the AP control unit 23, the first AP communication unit 21 performs a wireless communication with the traveling cart 1 at the transmission rate selected in advance by the communication management unit 3 from the plurality of transmission rates.

This allows the wireless base station 2 to transmit the management side transmission information to the traveling cart 1 while choosing depending on the case from the plurality of transmission rates that are recommended.

In the communication system 100 of this embodiment, the communication management unit 3 can communicate with a plurality of wireless base stations 2 via the CTRL communication unit 31. When it is necessary to switch the wireless base station 2 that is a wireless communication partner of the traveling cart 1 due to the traveling position of the traveling cart 1, the CTRL control unit 33 transmits the transmission rate information corresponding to the position where the traveling cart 1 is traveling and the management side transmission information to the wireless base station 2, which is the switching destination of the wireless communication partner of the traveling cart 1 via the CTRL communication unit 31.

As a result, even if the wireless base station 2 that is the wireless communication partner of the traveling cart 1 is switched, the wireless base station 2 which is the switching destination can start a preferable wireless communication with the traveling cart 1 immediately by using the transmission rate recommended by the communication management unit 3.

In the communication system 100 of this embodiment, in advance, the traveling cart 1 performs a wireless communication with the wireless base station 2 at each of the positions and at each of a plurality of different transmission rates. The transmission rate table is created by associating at least one transmission rate used for the wireless communication that was able to communicate at a quality higher than the predetermined level and the position information for each of the positions.

This allows the recommended transmission rate to be accurately determined.

In the communication system 100 of this embodiment, the transmission rate information indicating the transmission rate and the management side transmission information are described in the communication frame transmitted by the CTRL communication unit 31 to the wireless base station 2.

This allows for easy handling of information and more efficient communication by combining information indicating the two into one communication frame.

In the communication system 100 of this embodiment, both the transmission rate information and the management side transmission information are described in the data body part in the communication frame.

This allows for transmission rate instruction to be given to the wireless base station 2 and the traveling cart 1 without the need for a specially structured communication frame.

Next, the first modification of the above embodiment will be described. In a description of this embodiment, members identical or similar to those of the above-described embodiment are given the same corresponding reference numerals on the drawings, and descriptions thereof may be omitted.

In the communication system 100 of this modification, the traveling position of the traveling cart 1 at the time when the traveling cart 1 or the wireless base station 2 will receive the management side transmission information is estimated by the communication management unit 3. This estimation can be made based on the traveling position of the traveling cart 1 itself most recently detected by the position sensor, and using information such as the direction and speed of the traveling cart 1 since the timing of this detection. The information necessary for the above estimation is included in the cart side transmission information generated by the traveling cart 1 and transmitted to the communication management unit 3.

Instead of the traveling position of the traveling cart 1 acquired from the most recent cart side transmission information, the communication management unit 3 transmits the transmission rate information corresponding to the traveling position of the traveling cart 1 estimated as described above together with the management side transmission information to the wireless base station 2.

This allows the transmission rate information corresponding to the actual traveling position of the traveling cart 1 to be instructed to the traveling cart 1.

Next, a second modification of the above embodiment will be described. In a description of this modification, members identical or similar to those of the above-described embodiment are given the same corresponding reference numerals on the drawings, and descriptions thereof may be omitted.

In the communication system 100 of this modification, for example, the wireless base station 2 performs a wireless communication at the firstly-listed transmission rate in the transmission rate information included in the management side transmission frame.

Even if the traveling cart 1 receives the management side transmission frame from the wireless base station 2, the traveling cart 1 does not acquire the transmission rate from the management side transmission frame. The traveling cart 1 acquires the transmission rate by reading the information and the like contained in the preamble when the wireless base station 2 transmits the management side transmission information to the traveling cart 1. In other words, this transmission rate is the transmission rate that was actually used by the wireless base station 2 in a wireless communication. The traveling cart 1 performs a wireless communication with the wireless base station 2 using the same transmission rate acquired from the actual communication, not the transmission rate acquired from the management side transmission frame.

This allows the traveling cart 1 to perform a wireless communications at the same transmission rate as the wireless base station 2, as in the embodiments, etc., described above. In this configuration, the description of the transmission rate information can be omitted in the communication frame transmitted from the wireless base station 2 to the traveling cart 1.

Next, a third modification of the above embodiment will be described. In a description of this modification, members identical or similar to those of the above-described embodiment are given the same corresponding reference numerals on the drawings, and descriptions thereof may be omitted.

In this modification, the transmission rate information consists of only one most recommended transmission rate, rather than a plurality of transmission rates. The communication management unit 3 transmits this transmission rate information together with the management side transmission information to the wireless base station 2. In this modification, in the data body of the L2 frame, only the first six bytes (only one DBPS value) are allocated for the transmission rate information. The wireless base station 2 transmits the management side transmission information to the traveling cart 1 according to the transmission rate.

The communication quality acquisition unit 35 of the communication management unit 3 acquires communication quality information by performing various aggregation processes. For example, the communication quality acquisition unit 35 counts the number of times the communication management unit 3 transmitted the management side transmission information and the number of times the communication management unit 3 was able to receive the cart side transmission information within a predetermined time period after transmission. The communication quality acquisition unit 35 acquires communication quality information by calculating the ratio of the two count values.

The communication quality acquisition unit 35 monitors the acquired communication quality information. When a decrease in communication quality is detected, the transmission rate stored in the transmission rate table as the second recommended one is used as the transmission rate information transmitted by the communication management unit 3 to the wireless base station 2. In addition, the communication management unit 3 updates the transmission rate table stored by the CTRL storage unit to reflect the communication quality degradation detected for the transmission rate that has been used until now. This updating is performed by the transmission rate table updating unit 36.

As a result of this, all transmission rates are managed on the communication management unit 3 side. Therefore, the processing performed by the traveling cart 1 and the wireless base station 2 is simplified, and the configuration of the traveling cart 1 and the wireless base station 2 can be simpler.

Although the preferred embodiment and the modifications of the present invention have been described above, the configurations described above may be modified as follows, for example.

The transmission rate information may be described at any position, at the end for example, instead of at the beginning of the data body of the communication frame. The transmission rate information may be described in a part other than the data body of the communication frame. The management side transmission information and the transmission rate information may be transmitted in separate communication frames.

The transmission rate table may be configured to store only one recommended transmission rate per one position of the traveling cart 1. In this case, the transmission rate information always consists of only one transmission rate.

The track 5 is not limited to be included in the same plane, but may be set up three-dimensionally in three-dimensional space, for example.

As shown in FIG. 3, consider the case where the communication quality information corresponding to each transmission rate is stored in the transmission rate table in association with the transmission rate. In this case, the plurality of transmission rates corresponding to one position do not have to be arranged in the recommended order. Even if the transmission rates are not sorted in advance, the CTRL control unit 33 of the communication management unit 3 can acquire one or more transmission rates with the best communication quality, by comparing the communication quality information of each transmission rate. In this configuration, when new communication quality information is acquired by the communication quality acquisition unit 35, the transmission rate table updating unit 36 does not reorder the transmission rates in the transmission rate table, but instead simply reflects the new communication quality information.

The transmission rate information based on one or more recommended transmission rates corresponding to the current position of the traveling cart 1, which is determined by referring to the transmission rate table, is described in the management side transmission information by the transmission information generator 34, and the management side transmission information is transmitted to the traveling cart 1. However, transmission rate information based on one or more recommended transmission rates corresponding to the future position of the traveling cart 1, which is determined by referring to the transmission rate table, may be described in the management side transmission information, which is to be transmitted to the traveling cart 1. The future position of the traveling cart 1 is the position where the traveling cart 1 is expected to be after a given time period. The future position can be computed based on, for example, the current position of the traveling cart 1 acquired by the position sensor and the current speed of the traveling cart 1.

The acquisition of traveling position information is not limited to the above and may be done, for example, by optically reading barcode or other marking information on the track 5, or by using an indoor GNSS or the like.

The transmission rate table may be stored in both the traveling cart 1 and the communication management unit 3. In this case, the traveling cart 1 performs a wireless communication at the transmission rate read from the stored transmission rate table based on the position of the traveling cart 1 itself. This allows the traveling cart 1 to always perform a wireless communication without delay at the recommended transmission rate with respect to the position of the traveling cart 1 itself.

When there is no need to change the transmission rate information from the most recent one, the description of the transmission rate information may be omitted in the management side transmission frame. In this case, the wireless base station 2 and the traveling cart 1 determine the transmission rate during a wireless communication based on the transmission rate information described in the most recently received management side transmission frame.

Communication between the communication management unit 3 and the wireless base station 2 may be performed wirelessly.

### DESCRIPTION OF THE REFERENCE NUMERALS

1 Traveling cart
11 Cart wireless communication unit
12 Cart control unit
2 Wireless base station
21 First AP communication unit
22 Second AP communications unit
23 AP control unit
3 Communication management unit (controller)
31 CTRL communication unit
32 CTRL storage unit
33 CTRL control unit
34 Transmission information generator
35 Communication quality acquisition unit
36 Transmission rate table updating unit
4 Wired LAN
5 Track
6 Transport management unit

## Claims

1. A communication system comprising a traveling cart (1) traveling in a predetermined traveling area in a building, a wireless base station (2), and a controller (3) configured to communicate with the traveling cart (1) via the wireless base station (2), wherein
the traveling cart (1) comprises:
a cart wireless communication unit (11) configured to perform a wireless communication with the wireless base station (2); and
a cart control unit (12) that is capable of transmitting traveling position information indicating a traveling position of the traveling cart (1) itself in the traveling area to the wireless base station (2) via the cart wireless communication unit (11),
the wireless base station (2) comprises:
a first wireless base station communication unit (21) configured to perform a wireless communication with the traveling cart (1); and
a second wireless base station communication unit (22) configured to perform a communication with the controller (3),
the controller (3) comprises:
a controller communication unit (31) configured to communicate with the wireless base station (2);
a controller storage unit (32) configured to store a transmission rate table designating correspondence relationships between respective position information indicating a plurality of positions where the traveling cart (1) travels in the traveling area and at least one transmission rate recommended for a wireless communication performed by the traveling cart (1) and the wireless base station (2) when the traveling cart (1) is at each of the positions; and
a controller control unit (33) configured to acquire at least one transmission rate from the transmission rate table based on the position information corresponding to the traveling position information of the traveling cart (1) received via the wireless base station (2), to generate transmission rate information from the transmission rate which is acquired, and to transmit the transmission rate information, which is generated, and transmission information to be transmitted to the traveling cart (1) to the wireless base station (2) via the controller communication unit (31), and
when the wireless base station (2) receives the transmission rate information and the transmission information by communication between the second wireless base station communication unit (22) and the controller communication unit (31), the wireless base station (2) is configured to transmit the transmission information to the traveling cart (1) at the transmission rate acquired from the transmission rate information, via the first wireless base station communication unit (21).

2. The communication system according to claim 1, wherein
the wireless base station (2) is configured to transmit the transmission information and the transmission rate information to the traveling cart (1) via the first wireless base station communication unit (21), and
the cart wireless communication unit (11) is configured to perform a wireless communication with the wireless base station (2) at the transmission rate which is acquired from the transmission rate information received from the wireless base station (2).

3. The communication system according to claim 1, wherein
the cart wireless communication unit (11) is configured to perform a wireless communication with the wireless base station (2) at the same transmission rate as that used by the wireless base station (2) when the cart wireless communication unit (11) performed a communication with the wireless base station (2).

4. The communication system according to any one of claims 1 to 3, wherein
the controller control unit (33) of the controller (3) comprises:
a communication quality acquisition unit (35) configured to acquire a communication quality when the wireless base station (2) and the traveling cart (1) perform a wireless communication at the transmission rate which is recommended corresponding to the position of the traveling cart (1), as communication quality information; and
a transmission rate table updating unit (36) configured to update the transmission rate table stored in the controller storage unit (32) based on the communication quality information acquired by the communication quality acquisition unit (35).

5. The communication system according to any one of claims 1 to 4, wherein
the wireless base station (2) includes a wireless base station control unit (23) configured to acquire the transmission rate from the transmission rate information received from the controller (3) via the second wireless base station communication unit (22), and
when there are a plurality of transmission rates acquired from the transmission rate information by the wireless base station control unit (23), the first wireless base station communication unit (21) is configured to transmit the transmission information to the traveling cart (1) at the transmission rate selected from the plurality of transmission rates.

6. The communication system according to any one of claims 1 to 5, wherein
the controller (3) is capable to communicate with a plurality of the wireless base stations (2) via the controller communication unit (31), and
when it is necessary to switch the wireless base station (2) that is a wireless communication partner of the traveling cart (1) due to the traveling position of the traveling cart (1), the controller control unit (33) is configured to transmit the transmission rate information corresponding to the position where the traveling cart (1) is traveling, and the transmission information to the wireless base station (2) which is a switching destination of the wireless communication partner of the traveling cart (1) via the controller communication unit (31).

7. The communication system according to any one of claims 1 to 6, wherein
in advance, the traveling cart (1) is configured to perform a wireless communication with the wireless base station (2) at each of the positions and at each of a plurality of different transmission rates, and
the transmission rate table is created by associating at least one transmission rate used for the wireless communication that was able to communicate at a quality higher than a predetermined level and the position information for each of the positions.

8. The communication system according to any one of claims 1 to 7, wherein
the transmission rate information and the transmission information are described in a communication frame transmitted by the controller communication unit (31) to the wireless base station (2).

9. The communication system according to claim 8, wherein
both the transmission rate information and the transmission information are described in a data body part in the communication frame.

10. A communication method used by a communication system comprising a traveling cart (1) traveling in a predetermined traveling area in a building, a wireless base station (2), and a controller (3) that communicates with the traveling cart (1) via the wireless base station (2), the communication method comprising:
a traveling position information notification process in which the traveling cart (1) transmits traveling position information indicating the traveling position of the traveling cart (1) itself in the traveling area to the wireless base station (2);
a transmission rate instruction process in which, based on the traveling position information of the traveling cart (1) received by the controller (3) via the wireless base station (2), the controller (3) transmits transmission rate information indicating at least one transmission rate recommended for a wireless communication with the wireless base station (2) when the traveling cart (1) is at the traveling position indicated by the traveling position information to the wireless base station (2), wherein the transmission rate information is acquired from a stored thereon transmission rate table designating correspondence relationships between respective position information indicating a plurality of positions where the traveling cart (1) travels in the traveling area and at least one transmission rate recommended for a wireless communication performed by the traveling cart (1) and the wireless base station (2) when the traveling cart (1) is at each of the positions ; and
a communication process in which the wireless base station (2) performs a wireless communication with the traveling cart (1) at the transmission rate acquired from the transmission rate information received from the controller (3).

## Patentansprüche

1. Kommunikationssystem, das einen Fahrwagen (1), der in einem vorbestimmten Fahrbereich in einem Gebäude fährt, eine drahtlose Basisstation (2) und eine Steuerung (3) aufweist, die dazu konfiguriert ist, mit dem Fahrwagen (1) über die drahtlose Basisstation (2) zu kommunizieren, wobei
der Fahrwagen (1) folgende Merkmale aufweist:
eine drahtlose Wagenkommunikationseinheit (11), die dazu konfiguriert ist, eine drahtlose Kommunikation mit der drahtlosen Basisstation (2) durchzuführen; und
eine Wagensteuereinheit (12), die in der Lage ist, Fahrpositionsinformationen, die eine Fahrposition des Fahrwagens (1) selbst in dem Fahrbereich anzeigen, über die drahtlose Wagenkommunikationseinheit (11) an die drahtlose Basisstation (2) zu übertragen,
die drahtlose Basisstation (2) folgende Merkmale aufweist:
eine erste drahtlose Basisstationskommunikationseinheit (21), die dazu konfiguriert ist, eine drahtlose Kommunikation mit dem Fahrwagen (1) durchzuführen; und
eine zweite drahtlose Basisstationskommunikationseinheit (22), die dazu konfiguriert ist, eine Kommunikation mit der Steuerung (3) durchzuführen,
die Steuerung (3) folgende Merkmale aufweist:
eine Steuerungskommunikationseinheit (31), die dazu konfiguriert ist, mit der drahtlosen Basisstation (2) zu kommunizieren;
eine Steuerungsspeichereinheit (32), die dazu konfiguriert ist, eine Übertragungsratentabelle zu speichern, die Korrespondenzbeziehungen zwischen jeweiligen Positionsinformationen, die eine Mehrzahl von Positionen anzeigen, an denen der Fahrwagen (1) in dem Fahrbereich fährt, und zumindest einer Übertragungsrate bezeichnet, die für eine drahtlose Kommunikation empfohlen wird, die von dem Fahrwagen (1) und der drahtlosen Basisstation (2) durchgeführt wird, wenn sich der Fahrwagen (1) an jeder der Positionen befindet; und
eine Steuerungssteuereinheit (33), die dazu konfiguriert ist, zumindest eine Übertragungsrate aus der Übertragungsratentabelle basierend auf den Positionsinformationen zu erfassen, die den Fahrpositionsinformationen des Fahrwagens (1) entsprechen, die über die drahtlose Basisstation (2) empfangen werden, Übertragungsrateninformationen aus der erfassten Übertragungsrate zu erzeugen und die erzeugten Übertragungsrateninformationen und Übertragungsinformationen, die an den Fahrwagen (1) zu übertragen sind, über die Steuerungskommunikationseinheit (31) an die drahtlose Basisstation (2) zu übertragen, und
wenn die drahtlose Basisstation (2) die Übertragungsrateninformationen und die Übertragungsinformationen durch Kommunikation zwischen der zweiten drahtlosen Basisstationskommunikationseinheit (22) und der Steuerungskommunikationseinheit (31) empfängt, die drahtlose Basisstation (2) dazu konfiguriert ist, die Übertragungsinformationen mit der aus den Übertragungsrateninformationen erfassten Übertragungsrate über die erste drahtlose Basisstationskommunikationseinheit (21) an den Fahrwagen (1) zu übertragen.

2. Kommunikationssystem gemäß Anspruch 1, wobei
die drahtlose Basisstation (2) dazu konfiguriert ist, die Übertragungsinformationen und die Übertragungsrateninformationen über die erste drahtlose Basisstationskommunikationseinheit (21) an den Fahrwagen (1) zu übertragen, und
die drahtlose Wagenkommunikationseinheit (11) dazu konfiguriert ist, eine drahtlose Kommunikation mit der drahtlosen Basisstation (2) mit der Übertragungsrate durchzuführen, die aus den von der drahtlosen Basisstation (2) empfangenen Übertragungsrateninformationen erfasst wird.

3. Kommunikationssystem gemäß Anspruch 1, wobei
die drahtlose Wagenkommunikationseinheit (11) dazu konfiguriert ist, eine drahtlose Kommunikation mit der drahtlosen Basisstation (2) mit der gleichen Übertragungsrate durchzuführen, wie sie von der drahtlosen Basisstation (2) verwendet wird, wenn die drahtlose Wagenkommunikationseinheit (11) eine Kommunikation mit der drahtlosen Basisstation (2) durchführt.

4. Kommunikationssystem gemäß einem der Ansprüche 1 bis 3, wobei
die Steuerungssteuereinheit (33) der Steuerung (3) folgende Merkmale aufweist:
eine Kommunikationsqualitätserfassungseinheit (35), die dazu konfiguriert ist, eine Kommunikationsqualität, wenn die drahtlose Basisstation (2) und der Fahrwagen (1) eine drahtlose Kommunikation mit der Übertragungsrate durchführen, die entsprechend der Position des Fahrwagens (1) empfohlen wird, als Kommunikationsqualitätsinformationen zu erfassen; und
eine Übertragungsratentabellenaktualisierungseinheit (36), die dazu konfiguriert ist, die in der Steuerungsspeichereinheit (32) gespeicherte Übertragungsratentabelle basierend auf den von der Kommunikationsqualitätserfassungseinheit (35) erfassten Kommunikationsqualitätsinformationen zu aktualisieren.

5. Kommunikationssystem gemäß einem der Ansprüche 1 bis 4, wobei
die drahtlose Basisstation (2) eine drahtlose Basisstationssteuereinheit (23) aufweist, die dazu konfiguriert ist, die Übertragungsrate aus den von der Steuerung (3) über die zweite drahtlose Basisstationskommunikationseinheit (22) empfangenen Übertragungsrateninformationen zu erfassen, und
wenn es eine Mehrzahl von Übertragungsraten gibt, die von der drahtlosen Basisstationssteuereinheit (23) aus den Übertragungsrateninformationen erfasst werden, die erste drahtlose Basisstationskommunikationseinheit (21) dazu konfiguriert ist, die Übertragungsinformationen mit der aus der Mehrzahl von Übertragungsraten ausgewählten Übertragungsrate an den Fahrwagen (1) zu übertragen.

6. Kommunikationssystem gemäß einem der Ansprüche 1 bis 5, wobei
die Steuerung (3) in der Lage ist, mit einer Mehrzahl der drahtlosen Basisstationen (2) über die Steuerungskommunikationseinheit (31) zu kommunizieren, und
wenn es notwendig ist, die drahtlose Basisstation (2), die ein drahtloser Kommunikationspartner des Fahrwagens (1) ist, aufgrund der Fahrposition des Fahrwagens (1) umzuschalten, die Steuerungssteuereinheit (33) dazu konfiguriert ist, die Übertragungsrateninformationen, die der Position entsprechen, an der der Fahrwagen (1) fährt, und die Übertragungsinformationen an die drahtlose Basisstation (2), die ein Umschaltziel des drahtlosen Kommunikationspartners des Fahrwagens (1) ist, über die Steuerungskommunikationseinheit (31) zu übertragen.

7. Kommunikationssystem gemäß einem der Ansprüche 1 bis 6, wobei
der Fahrwagen (1) im Voraus dazu konfiguriert ist, eine drahtlose Kommunikation mit der drahtlosen Basisstation (2) an jeder der Positionen und bei jeder einer Mehrzahl von unterschiedlichen Übertragungsraten durchzuführen, und
die Übertragungsratentabelle durch Zuordnen zumindest einer Übertragungsrate, die für die drahtlose Kommunikation verwendet wurde, die in der Lage war, mit einer Qualität zu kommunizieren, die höher als ein vorbestimmtes Niveau ist, und der Positionsinformationen für jede der Positionen erzeugt wird.

8. Kommunikationssystem gemäß einem der Ansprüche 1 bis 7, wobei
die Übertragungsrateninformationen und die Übertragungsinformationen in einem Kommunikationsrahmen beschrieben sind, der von der Steuerungskommunikationseinheit (31) an die drahtlose Basisstation (2) übertragen wird.

9. Kommunikationssystem gemäß Anspruch 8, wobei
sowohl die Übertragungsrateninformationen als auch die Übertragungsinformationen in einem Datenkörperteil in dem Kommunikationsrahmen beschrieben sind.

10. Kommunikationsverfahren, das von einem Kommunikationssystem verwendet wird, das einen Fahrwagen (1), der in einem vorbestimmten Fahrbereich in einem Gebäude fährt, eine drahtlose Basisstation (2) und eine Steuerung (3) aufweist, die mit dem Fahrwagen (1) über die drahtlose Basisstation (2) kommuniziert, wobei das Kommunikationsverfahren Folgendes aufweist:
einen Fahrpositionsinformationsbenachrichtigungsprozess, bei dem der Fahrwagen (1) Fahrpositionsinformationen, die die Fahrposition des Fahrwagens (1) selbst in dem Fahrbereich anzeigen, an die drahtlose Basisstation (2) überträgt;
einen Übertragungsratenanweisungsprozess, bei dem die Steuerung (3) basierend auf den von der Steuerung (3) über die drahtlose Basisstation (2) empfangenen Fahrpositionsinformationen des Fahrwagens (1) Übertragungsrateninformationen, die zumindest eine Übertragungsrate anzeigen, die für eine drahtlose Kommunikation mit der drahtlosen Basisstation (2) empfohlen wird, wenn sich der Fahrwagen (1) an der von den Fahrpositionsinformationen angezeigten Fahrposition befindet, an die drahtlose Basisstation (2) überträgt, wobei die Übertragungsrateninformationen aus einer darauf gespeicherten Übertragungsratentabelle erfasst werden, die Korrespondenzbeziehungen zwischen jeweiligen Positionsinformationen, die eine Mehrzahl von Positionen anzeigen, an denen der Fahrwagen (1) in dem Fahrbereich fährt, und zumindest einer Übertragungsrate bezeichnet, die für eine drahtlose Kommunikation empfohlen wird, die von dem Fahrwagen (1) und der drahtlosen Basisstation (2) durchgeführt wird, wenn sich der Fahrwagen (1) an jeder der Positionen befindet; und
einen Kommunikationsprozess, bei dem die drahtlose Basisstation (2) eine drahtlose Kommunikation mit dem Fahrwagen (1) mit der Übertragungsrate durchführt, die aus den von der Steuerung (3) empfangenen Übertragungsrateninformationen erfasst wird.

## Revendications

1. Système de communication comprenant un chariot mobile (1) se déplaçant dans une zone de déplacement prédéterminée au sein d'un bâtiment, une station de base sans fil (2) et un contrôleur (3) configuré pour communiquer avec le chariot mobile (1) par l'intermédiaire de la station de base sans fil (2), dans lequel
le chariot de déplacement (1) comprend :
une unité de communication sans fil (11) du chariot, conçue pour établir une communication sans fil avec la station de base sans fil (2) ; et
une unité de commande du chariot (12) capable de transmettre à la station de base sans fil (2), via l'unité de communication sans fil du chariot (11), des informations de position de déplacement indiquant la position du chariot mobile (1) lui-même dans la zone de déplacement,
la station de base sans fil (2) comprend :
une première unité de communication de station de base sans fil (21) conçue pour établir une communication sans fil avec le chariot mobile (1) ; et
une deuxième unité de communication de station de base sans fil (22) conçue pour communiquer avec le contrôleur (3),
le contrôleur (3) comprend :
une unité de communication de contrôleur (31) conçue pour communiquer avec la station de base sans fil (2) ;
une unité de stockage de contrôleur (32) configurée pour stocker un tableau de débits de transmission désignant les relations de correspondance entre, d'une part, des informations de position respectives indiquant une pluralité de positions où le chariot mobile (1) se déplace dans la zone de déplacement et, d'autre part, au moins un débit de transmission recommandé pour une communication sans fil établie entre le chariot mobile (1) et la station de base sans fil (2) lorsque le chariot mobile (1) se trouve à chacune de ces positions ; et
une unité de commande (33) configurée pour extraire au moins un débit de transmission de la table des débits de transmission en fonction des informations de position correspondant aux informations de position de déplacement du chariot mobile (1) reçues via la station de base sans fil (2), pour générer des informations de débit de transmission à partir du débit de transmission ainsi acquis, et pour transmettre les informations de débit de transmission ainsi générées, ainsi que les informations de transmission à transmettre au chariot mobile (1), à la station de base sans fil (2) via l'unité de communication du contrôleur (31), et
lorsque la station de base sans fil (2) reçoit les informations relatives au débit de transmission et les informations de transmission par le biais d'une communication entre la deuxième unité de communication de la station de base sans fil (22) et l'unité de communication du contrôleur (31), la station de base sans fil (2) est configurée pour transmettre les informations de transmission au chariot mobile (1) au débit de transmission obtenu à partir des informations relatives au débit de transmission, via la première unité de communication de la station de base sans fil (21).

2. Système de communication selon la revendication 1, dans lequel
la station de base sans fil (2) est configurée pour transmettre les informations de transmission et les informations de débit de transmission au chariot mobile (1) via la première unité de communication de station de base sans fil (21), et
l'unité de communication sans fil (11) du chariot est configurée pour établir une communication sans fil avec la station de base sans fil (2) à un débit de transmission déterminé à partir des informations de débit de transmission reçues de la station de base sans fil (2).

3. Système de communication selon la revendication 1, dans lequel
l'unité de communication sans fil du chariot (11) est configurée pour établir une communication sans fil avec la station de base sans fil (2) au même débit de transmission que celui utilisé par la station de base sans fil (2) lorsque l'unité de communication sans fil du chariot (11) a établi une communication avec la station de base sans fil (2).

4. Système de communication selon l'une quelconque des revendications 1 à 3, dans lequel
l'unité de commande (33) du contrôleur (3) comprend :
une unité d'acquisition de la qualité de communication (35) configurée pour acquérir la qualité de communication lorsque la station de base sans fil (2) et le chariot mobile (1) établissent une communication sans fil au débit de transmission recommandé en fonction de la position du chariot mobile (1), sous forme d'informations sur la qualité de communication ; et
une unité de mise à jour du tableau des débits de transmission (36) configurée pour mettre à jour le tableau des débits de transmission stocké dans l'unité de stockage du contrôleur (32) en fonction des informations relatives à la qualité de communication acquises par l'unité d'acquisition de la qualité de communication (35).

5. Système de communication selon l'une quelconque des revendications 1 à 4, dans lequel
la station de base sans fil (2) comprend une unité de commande de station de base sans fil (23) configurée pour déterminer le débit de transmission à partir des informations de débit de transmission reçues du contrôleur (3) via la deuxième unité de communication de station de base sans fil (22), et
lorsque l'unité de commande de la station de base sans fil (23) a obtenu plusieurs débits de transmission à partir des informations de débit de transmission, la première unité de communication de la station de base sans fil (21) est configurée pour transmettre les informations de transmission au chariot mobile (1) au débit de transmission sélectionné parmi ces différents débits.

6. Système de communication selon l'une quelconque des revendications 1 à 5, dans lequel
le contrôleur (3) est capable de communiquer avec plusieurs stations de base sans fil (2) par l'intermédiaire de l'unité de communication du contrôleur (31), et
lorsqu'il est nécessaire de changer la station de base sans fil (2) qui est le partenaire de communication sans fil du chariot mobile (1) en raison de la position de déplacement de ce dernier, l'unité de commande (33) est configurée pour transmettre les informations de débit de transmission correspondant à la position où le chariot mobile (1) se déplace, ainsi que les informations de transmission, à la station de base sans fil (2) qui est la destination de commutation du partenaire de communication sans fil du chariot mobile (1) via l'unité de communication de la commande (31).

7. Système de communication selon l'une quelconque des revendications 1 à 6, dans lequel
au préalable, le chariot mobile (1) est configuré pour établir une communication sans fil avec la station de base sans fil (2) à chacune des positions et à chacun d'une pluralité de débits de transmission différents, et
le tableau des débits de transmission est créé en associant au moins un débit de transmission utilisé pour la communication sans fil qui a permis d'établir une communication d'une qualité supérieure à un niveau prédéterminé aux informations de position correspondant à chacune des positions.

8. Système de communication selon l'une quelconque des revendications 1 à 7, dans lequel
les informations relatives au débit de transmission et les informations de transmission sont décrites dans une trame de communication transmise par l'unité de communication du contrôleur (31) à la station de base sans fil (2).

9. Système de communication selon la revendication 8, dans lequel
les informations relatives au débit de transmission et celles relatives à la transmission sont toutes deux décrites dans une partie du corps de données de la trame de communication.

10. Procédé de communication utilisé par un système de communication comprenant un chariot mobile (1) se déplaçant dans une zone de déplacement prédéterminée au sein d'un bâtiment, une station de base sans fil (2), et un contrôleur (3) qui communique avec le chariot mobile (1) par l'intermédiaire de la station de base sans fil (2), le procédé de communication comprenant :
un processus de notification des informations de position de déplacement dans lequel le chariot mobile (1) transmet à la station de base sans fil (2) des informations de position de déplacement indiquant la position du chariot mobile (1) lui-même dans la zone de déplacement ;
un processus de commande du débit de transmission dans lequel, sur la base des informations de position de déplacement du chariot mobile (1) reçues par le contrôleur (3) via la station de base sans fil (2), le contrôleur (3) transmet à la station de base sans fil des informations de débit de transmission indiquant au moins un débit de transmission recommandé pour une communication sans fil avec la station de base sans fil (2) lorsque le chariot mobile (1) se trouve à la position de déplacement indiquée par lesdites informations de position de déplacement (2), dans lequel les informations de débit de transmission sont obtenues à partir d'une table de débits de transmission stockée sur celui-ci, désignant des relations de correspondance entre des informations de position respectives indiquant une pluralité de positions où le chariot mobile (1) se déplace dans la zone de déplacement et au moins un débit de transmission recommandé pour une communication sans fil effectuée par le chariot mobile (1) et la station de base sans fil (2) lorsque le chariot mobile (1) se trouve à chacune des positions ; et
un processus de communication dans lequel la station de base sans fil (2) établit une communication sans fil avec le chariot mobile (1) au débit de transmission déterminé à partir des informations de débit de transmission reçues du contrôleur (3).
